# EUROPEAN PATENT APPLICATION

(11) **EP 3 418 875 A1**
(43) Date of publication of application: **26.12.2018**
(21) Application number: 17177236.1
(22) Date of filing: 21.06.2017
(51) Int. Cl.: G06F 3/0488

(54) **DISPLAY CONTROL**

(71) Applicant: Vestel Elektronik Sanayi ve Ticaret A.S., 45030 Manisa (TR)
(72) Inventor: KÍRÍSKEN, Barbaros, 45030 Manisa (TR)
(74) Representative: Flint, Adam

(57) **Abstract**

A technique, comprising: controlling the output luminance of display content at at least one region of a display relative to the output luminance of display content at at least one other region of the display, based at least partly on a first indicator of a direction from which a distal end of a user finger is determined to touch a screen of the display.

## Description

### Technical Field

The present disclosure relates to display control.

### Background

User interfaces for display devices increasingly form part of the display itself, by using touch screen technology.

The inventors for the present application have noticed that the operation of touching a screen can have an adverse effect on how the display content is perceived by the one or more viewers (including a viewer other than the person operating the touchscreen user interface) outside the contact region.

### Summary

There is hereby provided a method, comprising: controlling the output luminance of display content at at least one region of a display relative to the output luminance of display content at at least one other region of the display, based at least partly on a first indicator of a direction from which a distal end of a user finger is determined to touch a screen of the display.

According to one embodiment, said controlling is also based at least partly on a second indicator of the size of the area over which a distal end of a user finger is determined to touch the screen of the display.

According to one embodiment, said first and second indicators are at least partly based on the output of one or more sensors responsive to the approach of a user finger towards the display screen and/or the movement of a user finger across the display screen.

According to one embodiment, the method further comprises: in response to determining a touching of the screen of the display in a contact region, selectively adjusting the output luminance of display content at a localised region of the display extending from the contact region in the direction from which the distal end of the user finger is determined to touch the screen in said contact region.

According to one embodiment, selectively adjusting the output luminance of display content at a localised region of the display is at least partly based additionally on an indicator of the intensity of ambient light incident on the display.

There is also hereby provided an apparatus, comprising: means for controlling the output luminance of display content at at least one region of a display relative to the output luminance of display content at at least one other region of the display, based at least partly on a first indicator of a direction from which a distal end of a user finger is determined to touch a screen of the display.

According to one embodiment, said controlling is also based at least partly on a second indicator of the size of the area over which a distal end of a user finger is determined to touch the screen of the display.

According to one embodiment, said first and second indicators are at least partly based on the output of one or more sensors responsive to the approach of a user finger towards the display screen and/or the movement of a user finger across the display screen.

According to one embodiment, the apparatus further comprises: means for, in response to determining a touching of the screen of the display in a contact region, selectively adjusting the output luminance of display content at a localised region of the display extending from the contact region in the direction from which the distal end of the user finger is determined to touch the screen in said contact region.

According to one embodiment, selectively adjusting the output luminance of display content at a localised region of the display is at least partly based additionally on an indicator of the intensity of ambient light incident on the display.

There is also hereby provided an apparatus comprising: a processor and memory including computer program code, wherein the memory and computer program code are configured to, with the processor, cause the apparatus to: perform any of the methods described above.

There is also hereby provided a computer program product comprising program code means which when loaded into a computer controls the computer to perform any of the methods described above.

### Brief Description of the Drawings

To assist understanding of the present disclosure and to show how embodiments may be put into effect, reference is made by way of example to the accompanying drawings in which:
Figure 1 illustrates an example of apparatus for implementing a technique according to an embodiment of the present invention;
Figure 2 illustrates an example of a technique according to an embodiment of the present invention; and
Figure 3 illustrates an example of operations at a display device processor according to an embodiment of the present invention.

### Detailed Description

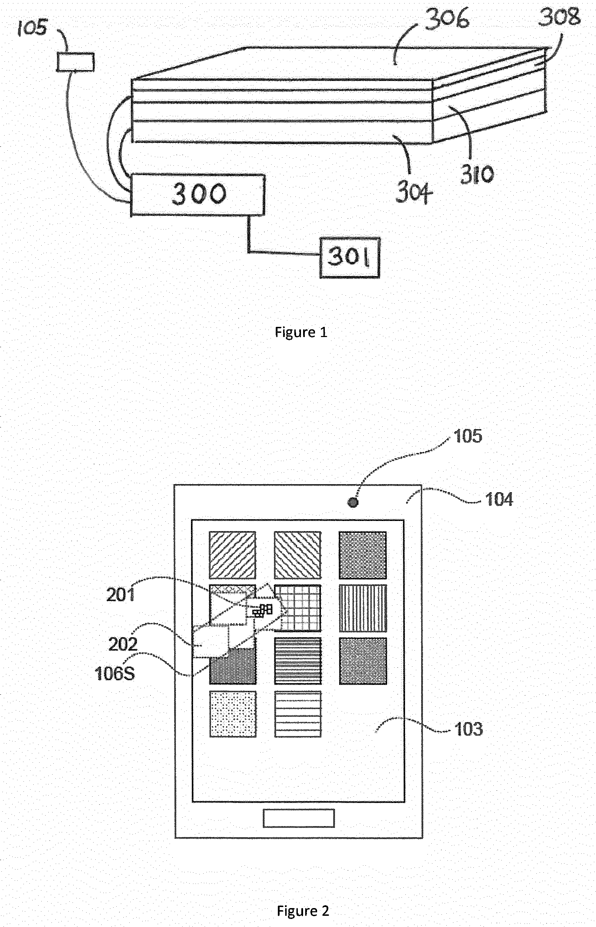

Figure 1 illustrates a combination of components of one example of an apparatus for implementing a technique according to an embodiment of the invention. Only those components necessary to explain the embodiment are shown in Figure 1, and the technique may also be used in display apparatus comprising additional components not shown in Figure 1.

A display device 104 comprises: a transparent, flexible protective cover 306 constituting the outer surface of the display screen 103; conductive circuitry for a projected-capacitive touchscreen sensor 308 below the protective cover 306; a support substrate (e.g. glass) 310 below the conductive circuitry for the projected-capacitive touchscreen sensor 308; and a display output component 304 below the support substrate 310.

The conductive circuitry for the projected-capacitive touch screen sensor 308 may comprise (a) an array of parallel drive conductors extending in parallel in a direction perpendicular to (b) an array of parallel sensing conductors, and capacitively coupled to the sending conductors via insulating, dielectric material. In operation of the display device, the array of drive conductors are driven in sequence (each drive conductor is driven for a predetermined length of time before the next drive conductor is driven for the same predetermined length of time, and so on), and processor(s) 300 reads the output signal at each of the sensor conductors during the length of time that a drive conductor is driven. The existence of a conductive object (such as a user finger) in a locality where one sensor conductor is capacitively coupled to one of the drive conductors produces a change in the output at that sensor conductor when that drive conductor is driven. Accordingly, the outputs at the sensor conductors provide an indicator of the location and movement of a conductive object such as a user finger over the display.

The display component 304 may, for example, be a liquid crystal display (LCD) component. A LCD component typically comprises a backlight, a colour filter array, two polarisers and a precisely controlled thickness of liquid crystal material contained between the two polarisers. The LCD component 304 further comprises active-matrix addressing circuitry via which electrical drive signals can be used to independently control one or more optical properties of the pixel portions of the LC material, and thereby independently control the output luminance for each display pixel.

Processor(s) 300 has a number of functions including: (i) controlling the drive signals to the addressing circuitry of the LCD component 304; (ii) controlling the drive signals to the drive conductors of the conductive circuitry for the projected-capacitive touchscreen sensor 308; (iii) reading and processing the outputs at the sensor conductors of the conductive circuitry for the projected-capacitive touchscreen sensor 308; and (iv) reading and processing the output of an ambient light sensor 105.

The processor(s) 300 operates in accordance with program code stored at memory 301; and all operations of the processor(s) 300 mentioned below are operations that follow program code stored at memory 301. Both the processor (s) 300 and the memory 301 may be implemented as one or more chips.

The ambient light sensor 105 may be located at a periphery of the display screen, and generates an output signal indicative of the intensity of ambient light incident on the display screen. The processor(s) 300 controls the overall/general output luminance of the display content based at least partly on the output of this ambient light sensor output signal, by e.g. controlling the electrical input power to the backlight of the display component to control the output luminance of the backlight. In general, the higher the intensity of ambient light detected by the ambient light sensor 105, the higher the electrical input power to the backlight of the display component 304.

With reference to Figure 2, the output signals from the sensor conductors for the projected-capacitive touchscreen sensor 308 provide (i) an indicator of the direction from which a user finger touched the screen in a contact region, and (ii) an indicator of the area over which the user finger touched the screen in the contact region, which is itself an indicator of the width of the user finger. For example, the order over time in which one or more points 201 of the screen are determined to be touch points is an indicator of the direction from which a user finger touched the screen; and the size of the area over which touch points 201 are detected is an indicator of the width of the user finger. In Figure 2, the dashed line 106S schematically shows the location of the shadow cast by the user finger on the display.

In this embodiment, the processor(s) 300 effectively determines, via the touch sensor outputs, the location and size of the shadow cast by the user's wrist/hand/finger on the screen when the screen is touched, and adjusts the output luminance of the display content in the determined shadow area relative to the output luminance of the display content outside the shadow area so as to better balance the viewer's perception of the display content in the shadow area and outside the shadow area, e.g. provide a more homogenous perception of colour across the whole of the display screen.

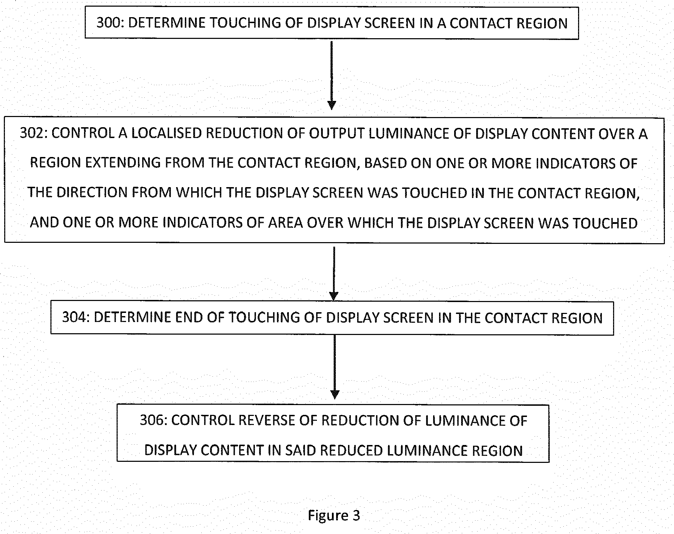

Figure 3 illustrates an example of operations at processor(s) 300 according to an embodiment of the invention.

In response to determining a touching of the screen 103 in a contact region based on the outputs of the sensor conductors for the projected-capacitive touchscreen sensor 308 (STEP 300), the processor(s) 300 controls a localised reduction in the output luminance of the display content in a predetermined manner in response to the indicators provided by the touch sensor output of (a) the direction from which a user finger touched the screen in the contact region, and (b) the width of the user finger (STEP 302). Figure 2 shows the regions 202 in which the output luminance of the display content is locally reduced in response to the above-mentioned indicators. The localised reduction in output luminance of the display content may be achieved by (i) adjusting the display content drive signals sent from the processor(s) 300 to the addressing circuitry for the display component (i.e. adjusting the drive signals to reduce the output luminance of the display content for each of the pixels in the regions 202, without the same reduction in output luminance of the display content for pixels outside the regions 202), or (ii) by using a segmented backlight for the display component, and reducing the electrical input power to one or more segments in the regions 202 whose output luminance is to be locally reduced. This localised reduction in output luminance of the display content does not affect the information content of the display output; the information content in the region of reduced luminance may be static or changing, and the localised reduction in output luminance serves to reduce the output luminance of that information content.

The localised reduction in output luminance of the display content is designed to offset the increase in brightness that would be perceived by a viewer in regions where the finger/hand/wrist of the user touching the screen with their finger reduces the intensity of ambient light incident on the screen (i.e. casts a shadow on the screen) outside the contact region. The localised reduction in output luminance of the display content in the "shadow area" provides a more homogenous perception of the display content to a viewer across the whole of the display screen including the "shadow area". The size of the reduction in output luminance of the display content in the "shadow area" may be controlled by the processor(s) 300 based at least partly on the output of the ambient light sensor 105. For example, the higher the intensity of ambient light detected via the ambient light sensor, the more the processor(s) 300 reduces the output luminance of the display content in the "shadow area".

In response to determining that touching of the display screen in the contact region has ended (STEP 304), the processor(s) 300 controls reversal of the localised reduction in output luminance of the display content (STEP 306).

The above-described technique may be particularly effective for larger display screens, such as screens having a screen dimension (diagonal distance between opposite corners) greater than 5 inches (about 12.5cm).

The processor(s) 300 may comprise a set of processors each having one more respective dedicated functions. For example, a set of processors may comprise: (a) a touch sensor processor to control the driving of the drive conductors for the projected-capacitive touchscreen sensor 308 and to read and process the signals from the sensor conductors for the projected-capacitive touchscreen sensor 308; (b) a display driver processor to receive signals indicating the display content to be displayed on the screen, and control the generation of signals for the addressing circuitry of the display component 304 accordingly; and a general processor to read input signals from the touch sensor processor and the ambient light sensor, and send control signals to the display processor.

An embodiment of the invention is described above for the example of an emissive-type LCD device. However, the same kind of technique may also be used in other types of LCD device, and also display devices other than LCD devices, such as LED display devices.

A projected-capacitive touchscreen sensor is used in the embodiment described above. However, any type of touchscreen sensor (capacitive or otherwise) with the capability to detect at least the direction in which the screen was touched in a contact region may be used.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method, comprising: controlling the output luminance of display content at at least one region of a display relative to the output luminance of display content at at least one other region of the display, based at least partly on a first indicator of a direction from which a distal end of a user finger is determined to touch a screen of the display.

2. A method according to claim 1, wherein said controlling is also based at least partly on a second indicator of the size of the area over which a distal end of a user finger is determined to touch the screen of the display.

3. A method according to claim 1 or claim 2, wherein said first and second indicators are at least partly based on the output of one or more sensors responsive to the approach of a user finger towards the display screen and/or the movement of a user finger across the display screen.

4. A method according to any preceding claim, comprising: in response to determining a touching of the screen of the display in a contact region, selectively adjusting the output luminance of display content at a localised region of the display extending from the contact region in the direction from which the distal end of the user finger is determined to touch the screen in said contact region.

5. A method according to claim 4, wherein selectively adjusting the output luminance of display content at a localised region of the display is at least partly based additionally on an indicator of the intensity of ambient light incident on the display.

6. Apparatus, comprising: means for controlling the output luminance of display content at at least one region of a display relative to the output luminance of display content at at least one other region of the display, based at least partly on a first indicator of a direction from which a distal end of a user finger is determined to touch a screen of the display.

7. Apparatus according to claim 6, wherein said controlling is also based at least partly on a second indicator of the size of the area over which a distal end of a user finger is determined to touch the screen of the display.

8. Apparatus according to claim 6 or claim 7, wherein said first and second indicators are at least partly based on the output of one or more sensors responsive to the approach of a user finger towards the display screen and/or the movement of a user finger across the display screen.

9. Apparatus according to any of claims 6 to 8, comprising: means for, in response to determining a touching of the screen of the display in a contact region, selectively adjusting the output luminance of display content at a localised region of the display extending from the contact region in the direction from which the distal end of the user finger is determined to touch the screen in said contact region.

10. Apparatus according to claim 9, wherein selectively adjusting the output luminance of display content at a localised region of the display is at least partly based additionally on an indicator of the intensity of ambient light incident on the display.

11. A computer program product comprising program code means which when loaded into a computer controls the computer to: control the output luminance of display content at at least one region of a display relative to the output luminance of display content at at least one other region of the display, based at least partly on a first indicator of a direction from which a distal end of a user finger is determined to touch a screen of the display.
